# EUROPEAN PATENT SPECIFICATION

(11) **EP 2 308 727 B1**
(45) Date of publication and mention of the grant of the patent: **21.09.2016**
(21) Application number: 08783856.1
(22) Date of filing: 04.08.2008
(51) Int. Cl.: B60S 1/54, B60S 1/60, H05B 3/84, B60H 1/34

(54) **A BLOW DEVICE FOR REAR VIEW MIRROR OF A VEHICLE**
BLASVORRICHTUNG FÜR DEN RÜCKSPIEGEL EINES FAHRZEUGS
DISPOSITIF DE SOUFFLAGE POUR RÉTROVISEUR D'UN VÉHICULE

(43) Date of publication of application: 13.04.2011
(73) Proprietor: Wang, Jianzhong, Fujian 361000 (CN)
(72) Inventor: Wang, Jianzhong, Fujian 361000 (CN)
(74) Representative: Isarpatent
(86) International application number: PCT/CN2008/071863
(87) International publication number: WO 2010/015115

(56) References cited:
- CN-A- 1 597 402
- CN-A- 101 054 083
- CN-Y- 2 712 743
- CN-Y- 2 776 773
- CN-Y- 2 900 273
- CN-Y- 2 910 697
- DE-A1- 10 209 940
- DE-A1- 19 827 005
- JP-A- 7 052 755
- JP-A- 2002 240 687
- JP-A- 2002 356 145
- KR-B1- 920 005 147
- US-A- 4 928 580
- US-B1- 6 267 664
- US-B1- 6 290 361
- US-B1- 6 290 361

## Description

### FIELD OF THE INVENTION

The invention relates to a blow device for rear view mirror of a vehicle, which is applicable to all kinds of vehicles to remove the fog and water droplets on the rear view mirrors and the corresponding windows.

### DESCRIPTION OF RELATED ART

In today's society, the technology develops rapidly, the quality of people's living rises continuously, and the pace of working and living becomes progressively faster, therefore, in order to enjoy a high quality of living sufficiently, accommodate to the fast pace and save time, more and more people choose to buy a car, and it has become a trend to take a car instead of walking.

When driving, safety is the first thing to be concerned. However, the safety of vehicles will be decreased greatly while driving in rain, and the reason, what is well known, mainly lies in slippery road in rainy days and bad sight; particularly in a wet day, the humidity outside of the vehicle is high, the temperature difference is great between inside and outside of the car, thereby humid air easily forms the fog and water droplets on the car windows (including front and rear windscreens, and side windows) or on the rear view mirrors. The fog and water droplets coating the surface of the rear view mirrors and corresponding car windows make the car windows and the rear view mirrors obscure and thereby further influence the sight of a driver. For example, the fog and water droplets are formed on the rear view mirrors and the corresponding car windows, so that a driver cannot observe the rear view mirrors through the side windows in backing, steering, or lane-changing, and thereby it is impossible to judge and determine the situation around the car body, which brings inconvenience to driver's driving and may even cause a traffic accident.
U.S. Patent No. 6,290,361 discloses a clearing system for external mirrors and side windows of a vehicle that provides a flow of compressed warm air to an air distribution unit equipped with a number of openings to direct the flow of air towards the surface of the mirror or a side window. In one embodiment, the air compressor, the air heater and an optional air filter are located in the housing of the external mirror. In another embodiment, a supplemental air distribution unit is provided to be mounted along the door of the vehicle to increase the coverage area of the side window. In a further embodiment of the invention, the system is made adjustable for allowing the most appropriate angle for the air openings towards the mirror and the side window. Provisions are also made to use the system for newly designed vehicles and incorporate the elements of the system into the design of the vehicle door.

In this regard, the inventor adds blow devices adjacent to the rear view mirrors and the side windows of a vehicle, so as to blow away the fog and water droplets in time in rainy days, and thereby making the sight of the driver clearer and facilitating safe driving, and further avoiding the occurrence of traffic accidents. Therefore, the present application is provided.

### SUMMARY OF THE INVENTION

The present invention aims to provide a blow device for rear view mirror of a vehicle, which is applicable to all kinds of vehicles to remove the fog and water droplets on the rear view mirrors and the side windows, so as to make the sight much clearer.

In order to achieve the above object, the present invention provides the following solutions.

A blow device for rear view mirror of a vehicle comprises a control circuit, an air compressor, an air duct and a blow nozzle(s), the control circuit controls the operation of the air compressor, an air outlet of the air compressor is connected to the blow nozzle via the air duct, and the blow nozzle(s) is mounted on the vehicle facing the rear view mirror and the side window, the blow device characterized in that is further comprising: a compression frequency adjuster and a sensor, wherein the sensor is used to detect the swing frequency of a wiper, and sends a signal to the control circuit, the control circuit processes the signal and then transmits an adjusting signal to the compression frequency adjuster, and the compression frequency adjuster controls the compression frequency of the air compressor based on the adjusting signal.

There are two blow nozzles, one is mounted on the mirror frame facing the rear view mirror, and the other is mounted on the support of the rear view mirror facing the side window.

The blow device further comprises a compression frequency adjuster and a sensor, wherein the sensor is used to detect the swing frequency of the wiper, and sends a signal to the control circuit, the control circuit processes the signal and then transmits an adjusting signal to the compression frequency adjuster, and the compression frequency adjuster controls the compression frequency of the air compressor based on the adjusting signal.

The blow device further comprises a heater between the air compressor and the air duct.

A vehicle is equipped with a device of the present invention applying the above configuration. When the driver activates the front window wiper while driving in rainy days, the device can be started. The control circuit controls the air compressor to operate, the air produced by the air compressor is blown out from the blow nozzle through the air duct towards the rear view mirror and the side window so as to disperse the fog and water droplets on the rear view mirror and the side window to keep the rear view mirror always clear and the side window always transparent, thereby the driver can observe the rear view mirror through the side window in backing, steering, or lane-changing to determine the situation around the car body. To keep a clear field of vision is more advantageous for safe driving and therefore avoiding a traffic accident.

### BRIEF DESCRIPTION OF THE DRAWINGS

Fig. 1 is a schematic view illustrating the configuration of a blow device according to an embodiment of the present invention;
Fig. 2 is a schematic view illustrating a vehicle to which a blow device according to an embodiment of the present invention is mounted; and
Fig. 3 is an enlarged view of Fig. 2.

Meanings of Reference Numbers
control circuit 1,
air compressor 2,
air duct 3,
blow nozzle 4,
heater 5,
compression frequency adjuster 6,
sensor 7,
wiper 8,
air exhausting frequency adjuster 9,
rear view mirror 10,
side window 20,
mirror frame of the rear view mirror 30,
support 40.

### DETAILED DESCRIPTION OF PREFERRED EMBODIMENT

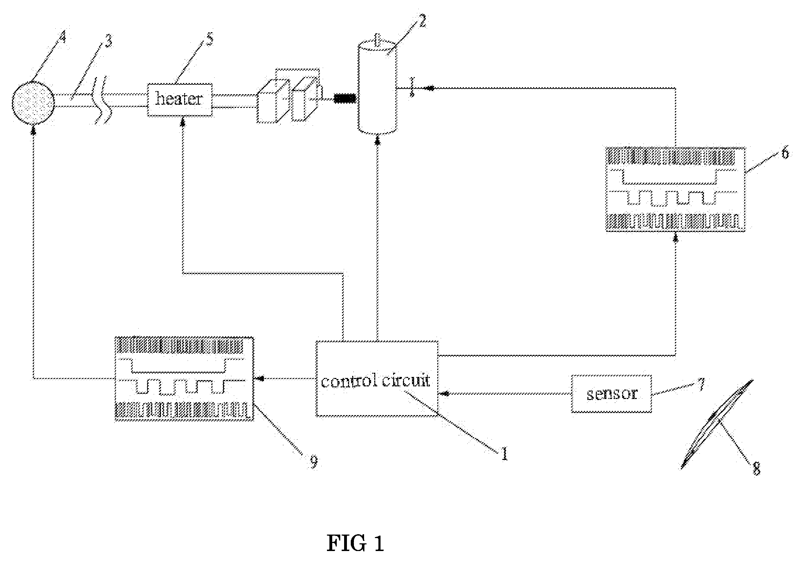

Fig. 1 shows the preferred embodiment of the present invention. As shown in Fig. 1, a blow device for rear view mirror of a vehicle comprises a control circuit 1, an air compressor 2, an air duct 3 and a blow nozzle 4.

Wherein, the control circuit 1 controls the operation of the air compressor 2, and can be arranged on any position in the vehicle invisibly according to the design requirement.

The air compressor 2 can also be arranged on any position in the vehicle invisibly according to the design requirement.

The air duct 3 is arranged in the vehicle invisibly. One end of the air duct 3 is connected to the air outlet of the air compressor 2, and the other end thereof is connected to the blow nozzle 4.

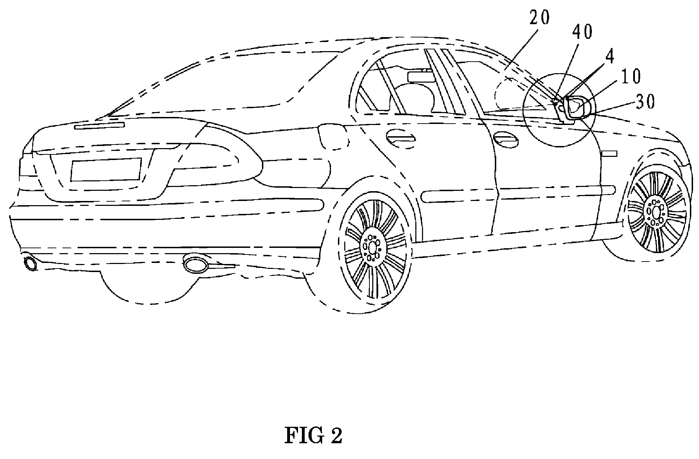

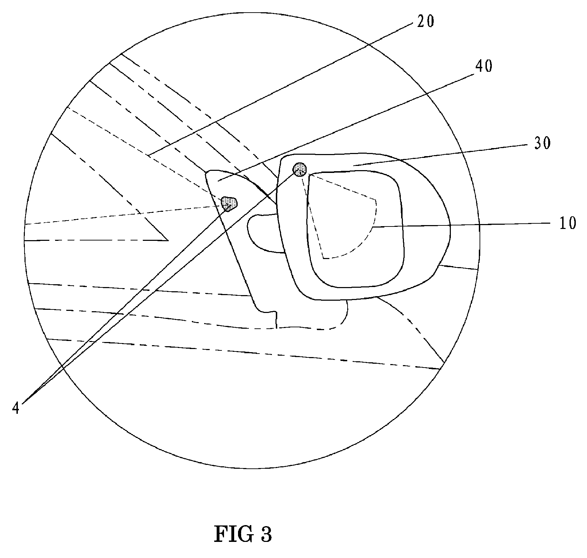

As shown in Figs. 2 and 3, the blow nozzle 4 is mounted on the vehicle facing the rear view mirror 10 and the side window 20. In order to blow away the fog and water droplets, there are two blow nozzles 4 in this embodiment, one is mounted on the mirror frame 30 facing the rear view mirror 10, and the other is mounted on the support 40 of the rear view mirror 10 facing the side window 20.

In order to blow away the fog and water droplets more quickly, a heater 5 is also arranged between the air compressor 2 and the air duct 3 in this embodiment, as shown in Fig. 1, the operation of the heater 5 can be controlled by the control circuit 1 as well, so that the heat air blown out from the blow nozzle 4 can make the fog and water droplets dispersed and dry more quickly to achieve better effect.

The present invention provides a compression frequency adjuster 6 and a sensor 7 and may also provide an air exhausting frequency adjuster 9. As shown in Fig. 1, the sensor 7 is used to detect the swing frequency of the wiper 8, and sends a detected signal to the control circuit 1. The control circuit 1 processes this detected signal and then transmits an adjusting signal to the compression frequency adjuster 6 and the air exhausting frequency adjuster 9 respectively. The compression frequency adjuster 6 controls the compression frequency of the air compressor 2 based on the adjusting signal, and the air exhausting frequency adjuster 9 controls the air exhausting frequency of the blow nozzle 4 based on the adjusting signal. In this way, when the wiper 8 swings fast, i.e., in heavy rain, the compression frequency of the air compressor 2 is fast and the blowing frequency of the blow nozzle 4 becomes slow, thereby the wind blown out is strong; and when the wiper 8 swings slowly, i.e., in light rain, the compression frequency of the air compressor 2 is slow and the blowing frequency of the blow nozzle 4 becomes fast, thereby the wind blown out is small. In a conclusion, this device can automatically adjust the blow amount depending on the precipitation rain fall. It is more beneficial to drying of the frog and water droplets. In practical implementation, it is possible to only provide the compression frequency adjuster 6 and the sensor 7, or also to provide them with the air exhausting frequency adjuster 9 This can be selected based on practical requirements and not limited to this embodiment described herein above.

In a word, a vehicle is equipped with a blow device according to the present invention. When the driver activates the front window wiper while driving in rainy days, the blow device can be started at the same time. The control circuit 1 controls the air compressor 2 to operate, the air produced by the air compressor 2 is blown out from the blow nozzle 4 through the air duct 3 towards the rear view mirror 10 and the side window 20, so as to disperse the fog and water droplets on the rear view mirror 10 and the side window 20 to keep the rear view mirror 10 always clear and the side window 20 always transparent and to make the sight of the driver clearer, thereby the driver can observe the rear view mirror 10 through the side window 20 in backing, steering, or lane-changing to judge and determine the situation around the car body. This is beneficial for safe driving and thus avoids a traffic accident.

The above embodiments are only for illustrating the technical solutions and features of the present invention rather than limiting the scope of the present invention. All equivalents, variations or modifications should be within the scope of the present invention as defined in the appended claims.

## Claims

1. A blow device for rear view mirror (10) of a vehicle, comprising:
a control circuit (1),
an air compressor (2),
an air duct (3) and a blow nozzle (4),
wherein the control circuit (1) controlling the operation of the air compressor (2),
wherein an air outlet of the air compressor (2) being connected to the blow nozzle (4) via the air duct (3), and
wherein the blow nozzle (4) is mounted on the vehicle facing the rear view mirror and the side window,
the blow device **characterized in that** is further comprising:
a compression frequency adjuster (6) and a sensor (7),
wherein the sensor (7) is used to detect the swing frequency of a wiper (8), and sends a signal to the control circuit (1),
the control circuit (1) processes the signal and then transmits an adjusting signal to the compression frequency adjuster, and
the compression frequency adjuster (6) controls the compression frequency of the air compressor (2) based on the adjusting signal.

2. The blow device for rear view mirror (10) of a vehicle of claim 1, wherein, the blow device comprises two blow nozzles, one is mounted on the mirror frame facing the rear view mirror (30), and the other is mounted on a support (40) of the rear view mirror (10) facing the side window.

3. The blow device for rear view mirror (10) of a vehicle of claim 1, further comprising an air exhausting frequency adjuster (9) and a sensor (7), wherein the sensor (7) is used to detect the swing frequency of a wiper (8), and sends a signal to the control circuit (1), the control circuit (1) processes the signal and then transmits an adjusting signal to the air exhausting frequency adjuster, and the air exhausting frequency adjuster (9) controls the air exhausting frequency of the blow nozzle (4) based on the adjusting signal.

4. The blow device for rear view mirror (10) of a vehicle of claim 1, further comprising a heater (5) arranged between the air compressor (2) and the air duct (3).

## Patentansprüche

1. Gebläsevorrichtung für einen Rückspiegel (10) eines Fahrzeugs, die Folgendes umfasst:
einen Steuerkreis (1),
einen Luftkompressor (2),
einen Luftkanal (3) und eine Blasdüse (4),
wobei der Steuerkreis (1) den Betrieb des Luftkompressors (2) steuert,
wobei ein Luftauslass des Luftkompressors (2) mit der Blasdüse (4) über den Luftkanal (3) verbunden ist, und
wobei die Blasdüse (4) so an dem Fahrzeug montiert ist, dass sie dem Rückspiegel und dem Seitenfenster zugewandt ist,
wobei die Gebläsevorrichtung **dadurch gekennzeichnet ist, dass** sie des Weiteren Folgendes umfasst:
eine Vorrichtung zur Einstellung der Kompressionsfrequenz (6) und einen Sensor (7),
wobei der Sensor (7) dafür verwendet wird, die Wischfrequenz eines Scheibenwischers (8) zu detektieren,
und ein Signal an den Steuerkreis (1) sendet,
wobei der Steuerkreis (1) das Signal verarbeitet und dann ein Einstellsignal an die Vorrichtung zur Einstellung der Kompressionsfrequenz sendet, und
die Vorrichtung zur Einstellung der Kompressionsfrequenz (6) die Kompressionsfrequenz des Luftkompressors (2) auf der Basis des Einstellsignals steuert.

2. Gebläsevorrichtung für einen Rückspiegel (10) eines Fahrzeugs nach Anspruch 1, wobei die Gebläsevorrichtung zwei Blasdüsen umfasst, von denen eine an dem Spiegelrahmen montiert ist, der dem Rückspiegel (30) zugewandt ist, und die andere an einer Stütze (40) des Rückspiegels (10) montiert ist, die dem Seitenfenster zugewandt ist.

3. Gebläsevorrichtung für einen Rückspiegel (10) eines Fahrzeugs nach Anspruch 1, die des Weiteren eine Vorrichtung zur Einstellung der Luftausstoßfrequenz (9) und einen Sensor (7) umfasst, wobei der Sensor (7) dafür verwendet wird, die Wischfrequenz eines Scheibenwischers (8) zu detektieren, und ein Signal an den Steuerkreis (1) sendet, wobei der Steuerkreis (1) das Signal verarbeitet und dann ein Einstellsignal an die Vorrichtung zur Einstellung der Luftausstoßfrequenz sendet, und die Vorrichtung zur Einstellung der Luftausstoßfrequenz (9) die Luftausstoßfrequenz der Blasdüse (4) auf der Basis des Einstellsignals steuert.

4. Gebläsevorrichtung für einen Rückspiegel (10) eines Fahrzeugs nach Anspruch 1, die des Weiteren eine Heizung (5) umfasst, die zwischen dem Luftkompressor (2) und dem Luftkanal (3) angeordnet ist.

## Revendications

1. Dispositif de soufflage pour rétroviseur (10) d'un véhicule, comprenant :
un circuit de commande (1),
un compresseur d'air (2),
un conduit d'air (3) et une buse de soufflage (4),
dans lequel le circuit de commande (1) commande le fonctionnement du compresseur d'air (2),
dans lequel une sortie d'air du compresseur d'air (2) est raccordée à la buse de soufflage (4) par l'intermédiaire du conduit d'air (3), et
dans lequel la buse de soufflage (4) est montée sur le véhicule en regard du rétroviseur et de la vitre latérale,
le dispositif de soufflage étant **caractérisé en ce qu'**il comprend en outre :
un dispositif de réglage de la fréquence de compression (6) et un capteur (7),
dans lequel le capteur (7) est utilisé pour détecter la fréquence de balayage d'un essuie-glace (8), et envoie un signal au circuit de commande (1),
le circuit de commande (1) traite le signal, puis émet un signal de réglage vers le dispositif de réglage de la fréquence de compression, et
le dispositif de réglage de la fréquence de compression (6) régule la fréquence de compression du compresseur d'air (2) sur la base du signal de réglage.

2. Dispositif de soufflage pour rétroviseur (10) d'un véhicule selon la revendication 1, le dispositif de soufflage comprenant deux buses de soufflage, l'une est montée sur le cadre du rétroviseur en regard du rétroviseur (30), et l'autre est montée sur un support (40) du rétroviseur (10) en regard de la vitre latérale.

3. Dispositif de soufflage pour rétroviseur (10) d'un véhicule selon la revendication 1, comprenant en outre un dispositif de réglage de la fréquence d'évacuation d'air (9) et un capteur (7), dans lequel le capteur (7) est utilisé pour détecter la fréquence de balayage d'un essuie-glace (8) et envoie un signal au circuit de commande (1), le circuit de commande (1) traite le signal, puis émet un signal de réglage vers le dispositif de réglage de la fréquence d'évacuation d'air, et le dispositif de réglage de la fréquence d'évacuation d'air (9) régule la fréquence d'évacuation d'air de la buse de soufflage (4) sur la base du signal de réglage.

4. Dispositif de soufflage pour rétroviseur (10) d'un véhicule selon la revendication 1, comprenant en outre un élément de chauffage (5) disposé entre le compresseur d'air (2) et le conduit d'air (3).
